# EUROPÄISCHE PATENTANMELDUNG

(11) **EP 1 253 092 A1**
(43) Veröffentlichungstag der Anmeldung: **30.10.2002**
(21) Anmeldenummer: 02006959.7
(22) Anmeldetag: 27.03.2002
(51) Int. Cl.: B65G 11/16, B65G 53/52

(54) **Auskleidungselement für einen Förderweg**

(30) Priorität: 25.04.2001 DE 10120131
(71) Anmelder: Wolf, Winand, 41812 Erkelenz (DE)
(72) Erfinder: Wolf, Winand, 41812 Erkelenz (DE)
(74) Vertreter: Kohlmann, Kai, Dipl.-Ing.

(57) **Zusammenfassung**

Um ein Auskleidungselement für einen Förderweg von einer Förderanlage für die glasverarbeitende Industrie zu schaffen, wird erfindungsgemäß ein Auskleidungselement für einen Förderweg von einer Förderanlage vorgeschlagen, bei dem das Auskleidungselement ein Behälter (1) ist, den Trennwände (2,3) in mehrere Zellen (4) unterteilen, die mit in ausgehärtetem Kunstharz eingebetteten Glasbruchstücken und/oder einer erstarrten Rauhschmelze aus Glas gefüllt sind.

## Beschreibung

Die Erfindung betrifft ein Auskleidungselement für einen Förderweg von einer Förderanlage, insbesondere für die Förderung von Glasbruchstücken in der glasverarbeitenden Industrie, wobei das Auskleidungselement ein Behälter ist, den Trennwände in mehrere Zellen unterteilen.

Beim Glasrecycling fallen Scherben unterschiedlicher Färbung, Körnung und Qualität an, die durch Einschmelzen in Schmelzwannen dem Herstellungsprozess wieder zugeführt werden. Bei der Verarbeitung von Hohlglasscherben unterschiedlicher Färbung ist auf eine sorgfältige Farbtrennung zu achten, wobei die Empfindlichkeit gegen Verunreinigungen von braunem über grünes bis zum weißen Glas zunimmt. Das Weißglas muss fast völlig fehlfarbenfrei sein. Schließlich darf der Anteil an Fremdbestandteilen in der Glasschmelze nicht höher als 25 Gramm pro Tonne sein. Die exakte Trennung ist erforderlich, da andernfalls bei der Herstellung des Recyclingglases eine exakte Prozessführung nicht möglich ist.

Verunreinigungen des Glaserzeugnisses resultieren beispielsweise aus metallischen Schleißpartikeln, die die abrasiven Glasscherben auf ihrem Weg zur Schmelzwanne aus dem Förderweg herauslösen. Derzeit werden in der Glasindustrie Auskleidungselemente für Förderwege verwendet, die aus hochfesten Schleißblechen, beispielsweise aus Vautid, Hardox oder UH 90 bestehen. Um die hohe Festigkeit zu erzielen, enthalten diese Schleißbleche geringe Anteile an Chrom und Nickel. Durch die Förderung von Glasbruchstücken gelangt daher auch Chrom und Nickel in die Glasschmelze, die sich insbesondere bei der Herstellung von Weißglas durch eine unerwünschte Grünfärbung bemerkbar machen.

Die Auskleidung von nicht ebenen Bereichen des Förderwegs, wie beispielsweise im Bereich von Krümmungen, ist mit den herkömmlichen hochfesten Schleißblechen problematisch, da sie sich nur äußerst schwierig umformen und schneiden lassen. Des weiteren sind die hochfesten Schleißbleche aus Spezialstahl recht teuer.

Aus der EP 0875 135 A2 ist ein Gebläse zum Fördern stark schleißender Blasgüter mit einem Flügel-Förderrad bekannt, das in einem Gebläsegehäuse rotiert. Um bei hoher Leistungsfähigkeit einen geringen Verschleiß zu ermöglichen, weist das Gebläse an den Flügeln des Förderrades und an der Gehäuseinnenwand Halteprofilierungen auf, die sich während des Gebläsebetriebs mit dem Blasgut derart zusetzen, dass diese Gebläseteile mit einem schützenden Materialpolster überdeckt sind.

Ferner ist aus der DE 3505 461 A1 ein Rohrkrümmer für Kohlenstaubleitungen, zum Transport eines abrasiven Gemisches aus Kohlenstaub und Luft bekannt, wobei ein Teil des äußeren Umfangs des Rohrkrümmers auf der Rohrinnenseite mit einer Metallfasermatte abgedeckt ist. Kohlenstaubpartikel, die mit er Rohrinnenseite in Berührung kommen, dringen in die Matte ein und werden dort durch den ständigen Aufprall der Kohlenstaubpartikel verfestigt. Die dem stark schleißenden Kohlenstaub ausgesetzte Oberfläche besteht selbst aus fest zusammengepresster Kohle, so dass ein Verschleißschutz für den Rohrkrümmer besteht.

Ausgehend von einem als Behälter ausgestalteten, durch Trennwände in mehrere Zellen unterteilen Auskleidungselement für einen Förderweg einer Förderanlage, liegt der Erfindung die Aufgabe zugrunde, ein Auskleidungselement insbesondere für die Förderung von Glasbruchstücken in der glasverarbeitenden Industrie zu schaffen, das sich einfach umformen und verarbeiten lässt, sowie eine verbesserte Produktreinheit der aus dem Fördergut hergestellten Schmelze bei einer mit herkömmlichen Auskleidungselementen für die Förderung von Glasbruchstücken in der glasverarbeitenden Industrie vergleichbaren Standzeit ermöglicht.

Diese Aufgabe wird bei einem Auskleidungselement der eingangs erwähnten Art dadurch gelöst, dass die Zellen mit in ausgehärtetem Kunstharz eingebetteten Glasbruchstücken und/oder einer erstarrten Rauhschmelze aus Glas gefüllt sind.

Das Auskleidungselement ist vor seine Montage bereits mit einem Werkstoff gefüllt, der größtenteils aus dem für den Transport auf dem Förderweg vorgesehenen Fördermaterial besteht. Indem das Auskleidungselement nunmehr zu einem erheblichen Teil aus einem Werkstoff gleicher Herkunft wie das Fördergut besteht, werden unerwünschte metallische Schleißpartikel erheblich reduziert. Die in ausgehärtetem Kunstharz eingebetteten Glasbruchstücke und/oder die erstarrte Rauhschmelze setzen dem Fördergut einem ausreichenden Widerstand entgegen, so dass für das Auskleidungselement auf hochfeste Stähle völlig verzichtet werden kann. Anstelle dessen kann ein leicht schneid- und umformbares Material für den Behälter mit seinen Trennwänden zum Einsatz gelangen, wie beispielsweise Stahlblech, Edelstahl oder Kunststoff. Die Verwendung von Edelstahl oder Kunststoff ist angezeigt, wenn Säurebeständigkeit, Lebensmittelechtheit, Korrosionsfestigkeit oder Isolationseigenschaften gefordert sind.

Der derart vorgefüllte Behälter kann offen oder geschlossen ausgeführt sein. Eine zum Förderweg hin offene Ausführung kommt herstellungsbedingt insbesondere für ebene Auskleidungselemente zum Einsatz. Sollen Krümmungen ausgekleidet werden, sind die Auskleidungselemente herstellungsbedingt regelmäßig als geschlossene Behälter ausgeführt. Die etwa 2 bis 3 mm starke Behälterwand bildet bei geschlossenen Behältern zunächst die Oberfläche des Förderweges. Erst nachdem diese Oberfläche verschlissen ist, kommt die Glasfüllung des Behälters als Oberfläche des Förderweges zum tragen. Es besteht jedoch auch die Möglichkeit, den Behälter nur während des Füllvorgangs des gekrümmtem Auskleidungselementes, beispielsweise mit einem Deckel zu verschließen, der die Glasscherben und den Härter bzw. die Rauhschmelze während der Aushärtung in der Form zurückhält.

Die Trennwände innerhalb des Behälters erhöhen die Festigkeit der Glasfüllung beim Abrollen, insbesondere jedoch beim Aufprall des Fördergutes auf den Förderweg, wie beispielsweise an Übergabestellen.

Wenn das Fördergut auf der Glasfüllung des Behälters gefördert wird, lassen sich aufgrund der Oberflächenbeschaffenheit Förderrinnen mit geringerem Neigungswinkeln als mit den bisher verwendeten hochfesten Schleißblechen realisieren. Als weiterer Vorteil der Glasfüllung hat sich herausgestellt, dass es nicht zu Anbackungen des Fördergutes an der Oberfläche des Förderweges kommt, die bei herkömmlichen Auskleidungselementen zu Förderstillständen führen können.

Die Füllung aus in ausgehärtetem Kunstharz eingebetteten Glasbruchstücken setzt sich vorteilhafterweise zu 60 bis 70 Volumenprozent aus Glasbruchstücken und dem Rest aus ausgehärteten Kunstharz zusammen. Dieses Verhältnis zwischen Glasbruchstücken und ausgehärtetem Kunstharz gilt auch dann, wenn sich zusätzlich erstarrte Rauhschmelze in dem Auskleidungselement befindet. Den in Versuchen verwendeten Polyesterharzen wurden jeweils zwei Gewichtsprozent Härter zugesetzt. Dabei ergaben sich Aushärtezeiten bei Raumtemperatur von bis zu 8 Stunden.

Die ausschließliche oder zusätzliche Füllung des Behälters mit erstarrter Rauhschmelze verlängert aufgrund der größeren Dichte des Füllmaterials die Standzeit des Auskleidungselementes.

Rauhschmelze entsteht im Transformationsbereich von Glas. Der Transformationsbereich ist das Temperaturgebiet, in dem Glas mit steigender Temperatur allmählich vom spröden in den zähflüssigen Zustand übergeht. Die Erfindung macht sich die Tatsache zu Nutze, dass Glas ein Werkstoff ohne definierten Schmelzpunkt, jedoch mit einem breitem Schmelzintervall ist. Durch Erwärmung von Glas oder Glasmehl in den Zellen bis in den Transformationsbereich etwa bei 850 ° C, jedoch unterhalb der Schmelztemperatur der Trennwände lassen sich die Zellen mit erstarrter Rauhschmelze vollständig füllen. Die inhomogene, stark schlierige und blasenreiche Struktur der Rauhschmelze verursacht in den Zellen keine Probleme.

Soll Hohlglas über den Förderweg befördert werden, kommt vorteilhafter weise Weißglas als Ausgangsmaterial für die Behälterfüllung zum Einsatz, da der Abrieb von Weißglas bei der Herstellung von Buntglas, wie beispielsweise Grün- oder Braunglas nicht qualitätsmindernd wirkt. Soll Spezialglas gefördert werden, wie beispielsweise Bildschirm-, Ceran-, Spiegel- oder Flachglas werden die Füllungen für die Behälter unter Verwendung des Spezialglases als Ausgangsmaterial hergestellt. In Folge dessen führt der Abrieb nicht zu qualitätsmindernden Verunreinigungen in der Schmelze.

Eine optimale Körnung weist insbesondere 70 % der Glasbruchstücke im Bereich von 4-12 mm und der Rest im Bereich kleiner 4 mm auf. Dabei beziehen sich die Prozentangaben auf die Anzahl der in dem ausgehärtetem Kunstharz eingebetteten Glasbruchstücke.

Insbesondere in Bereichen hoher Stoßbelastung auf die Auskleidungselemente, d. h. im Bereich von Übergaben und Aufgaben hat es sich als zweckmäßig erwiesen, wenn die Trennwände in Form eines Rostes miteinander verbunden sind. Die zu einem Kreuzwerk angeordneten Trennwände verhindern ein vorzeitiges Ausbrechen der Glasbruchstücke aus dem Kunstharz.

Ebene Auskleidungselemente sind vorzugsweise nach den Merkmalen des Unteranspruchs 6 ausgestaltet. In dem der Rost am Behälterboden befestigt ist und sämtliche Trennwände im Abstand von den Seitenwänden des Behälters enden, verteilt sich während des Herstellungsprozesses des Auskleidungselementes der Kunstharz gleichmäßig über sämtliche Zellen. Eine weitere Verbesserung der Verteilung des Kunstharzes lässt sich erzielen, wenn die in Einbaulage längs des Förderweges verlaufenden Trennwände im Abstand von dem Behälterboden enden. Der Kunstharz kann dann auch in diejenigen Zellen fließen, die nicht unmittelbar von den Seitenwänden des Behälters begrenzt werden.

Zur Erhöhung der Standzeiten der Auskleidungselemente hat es sich als vorteilhaft herausgestellt, wenn die Trennwände in Einbaulage des Auskleidungselementes zumindest teilweise quer zum Förderweg verlaufen.

Um das Auskleidungselement an der Tragkonstruktion des Förderweges befestigen zu können ist an der in Einbaulage des Behälters unteren Seite mindestens ein Befestigungsmittel, beispielsweise ein Gewindestift angeordnet.

Ein ausschließlich mit einer erstarrten Rauhschmelze gefülltes Auskleidungselement wird nach den Merkmalen des Anspruchs 9 hergestellt. Wegen der Schrumpfung des Ausgangsmaterials in Folge der Erhitzung in den Transformationsbereich bis etwa 850 C° muss mit einem Aufsatz gearbeitet werden, um den Behälter vollständig mit fester Erstarrte Rauhschmelze füllen zu können, es sei denn, der in Folge der Schrumpfung nicht mit erstarrter Rauhschmelze gefüllte Teil des Behälters wird nach der Erhitzung abgetrennt.

Soll weder ein Aufsatz zum Einsatz kommen, noch das Auskleidungselement nach Bildung der erstarrten Rauhschmelze teilweise abgetrennt werden, besteht die Möglichkeit, den nicht mit Rauhschmelze gefüllten Teil des Behälters mit Glasbruchstücken, Kunstharz und Härter aufzufüllen oder leer zu belassen.

Nachfolgend wird die Erfindung anhand von Ausführungsbeispielen des näheren erläutert:

Es zeigen,
- **Figur 1:**: Ein ebenes Auskleidungselement mit in Form eines Rostes miteinander verbundenen Trennwänden,
- **Figur 2:**: Ein ebenes Auskleidungselement ausschließlich mit quer zum Förderweg verlaufenden Trennwänden,
- **Figur 3:**: Einen Schnitt durch ein Auskleidungselement nach Figur 1 längs der Linie A-A mit einer Füllung aus Glasbruchstücken,
- **Figur 4:**: Einen Schnitt durch ein Auskleidungselement nach Figur 1 längs der Linie A-A mit einer Füllung aus erstarrter Rauhschmelze und Glasbruchstücken,
- **Figur 5:**: Einen Schnitt durch ein Auskleidungselement nach Figur 1 längs der Linie A-A mit einem Aufsatz und einer Füllung aus erstarrter Rauhschmelze,
- **Figur 6:**: Ein gekrümmtes Auskleidungselement mit eine Füllung aus erstarrter Rauhschmelze sowie
- **Figur 7:**: Einen Schnitt durch das Auskleidungselement nach Figur 6 längs der Linie A-A.

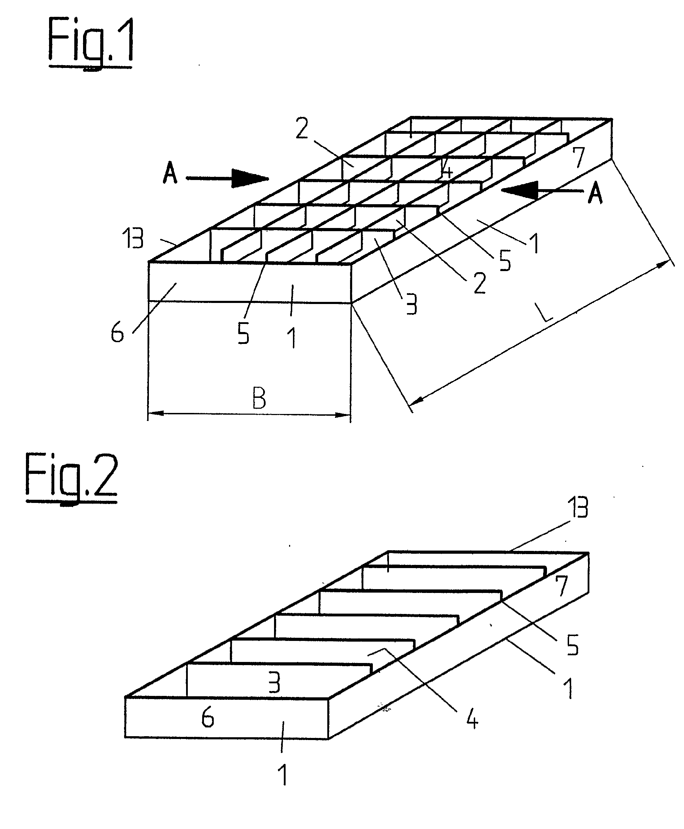

Figur 1 zeigt ein erfindungsgemäßes Auskleidungselement, das einen im Verhältnis zu seiner Länge L und Breite B flachen Behälter 1 umfasst. Rechtwinklig zueinander verlaufende Trennwände 2 und 3 bilden einen Rost, der den Behälter 1 in zum Förderweg hin offene Zellen 4 unterteilt. Sämtliche Trennwände 2 und 3 enden mit einem Abstand 5 von etwa 10 mm zu den Seitenwänden 6 und 7 des Behälters 1. Weiter ist aus Figur 1 erkennbar, dass die in Einbaulage des Auskleidungselementes längs des Förderweges verlaufenden Trennwände 2 sich vom oberen Behälterrand 13 nur über die halbe Behälterhöhe H erstrecken. In Verbindung mit den Abständen 5 zu den Seitenwänden 6 und 7 wird durch diese einfache Maßnahme gewährleistet, dass sich etwa in den Behälter 1 eingefüllter Kunstharz gleichmäßig in sämtlichen Zellen 4 verteilt. Die Seitenwände 6 und 7 sowie die Trennwände 2 und 3 bestehen aus Stahlblech St 37-2 in 2 mm Dicke.

Das in Figur 2 dargestellte Auskleidungselement umfasst ebenfalls einen im Verhältnis zu seiner Länge und Breite flachen Behälter 1, der allerdings abweichend von dem nach Figur 1 ausschließlich durch in Einbaulage des Auskleidungselementes quer zum Förderweg verlaufende Trennwände 3 unterteilt wird. Diese Ausführungsform weist insgesamt lediglich 6 Zellen 4 auf. In Versuchen hat sich herausgestellt, dass Auskleidungselemente nach Figur 2 an solchen Stellen des Förderweges längere Standzeiten als solche nach Figur 1 haben, an denen nur geringe Stoßbelastungen durch das Fördergut auftreten, d. h. außerhalb des Bereichs von Übergaben und Aufgaben für das Fördergut.

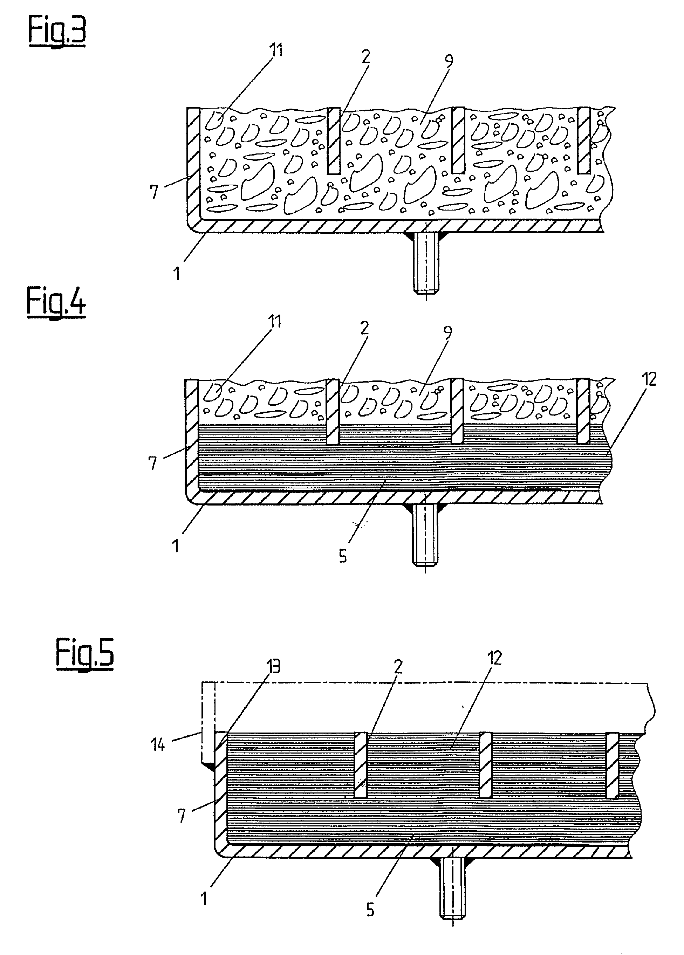

Die Schnittdarstellung nach Figur 3 zeigt ein Auskleidungselement nach Figur 1, das ausschließlich mit in ausgehärteten Kunstharz 9 eingebetteten Glasbruchstücken 10 gefüllt ist. Etwa 70 % der Glasbruchstücke 10 weisen eine Korngröße zwischen 4 und 12 mm auf, während etwa 30 % eine Korngröße zwischen 2 und 4 mm aufweisen. Der Volumenanteil des Kunstharzes 9 am Behältervolumen beträgt etwa 35 - 40 %, wobei der Kunstharz 9 vor dem Eingießen in den Behälter 1 mit etwa 2 % Härter versetzt wird. Im Ausführungsbeispiel kam ein vorbeschleunigtes, ungesättigtes Polyesterharz für die Kalthärtung zum Einsatz, das mit 2 % MEKP-Härter ausgehärtet wurde.

Figur 4 zeigt das Auskleidungselement nach Figur 1 mit einer ersten Schicht erstarrter Rauhschmelze 12 und einer zweiten Schicht mit in ausgehärtetem Kunstharz 9 eingebetteten Glasbruchstücken 11. Zur Herstellung der Rauhschmelze 12 wird der Behälter 1 zunächst mit Glasbruchstücken bis zu seinem oberen Rand 13 gefüllt. Anschließend wird der Behälter 1 auf eine Temperatur von etwa 850 C° gebracht. Durch die Erhitzung und anschließende Abkühlung bildet sich die erstarrte Rauhschmelze 12, deren Volumen gegenüber dem Füllvolumen des Behälters 1 um etwa 1/3 reduziert ist, wie dies in Figur 4 angedeutet ist. Nach der Abkühlung der Rauhschmelze 12 wird der verbleibende Teil des Behälters 1 mit Glasbruchstücken, Kunstharz und Härter entsprechend der Beschreibung zu Figur 3 aufgefüllt.

Soll eine vollständige Füllung mit erstarrter Rauhschmelze 12 erfolgen, wird auf den Behälterrand 13 ein Aufsatz 14 gesetzt, der die Behälterwandlung allseitig um etwa 1/3 erhöht (Figur 5). Das um etwa 1/3 erhöhte Füllvolumen des Behälters 1 wird bis zu seinem oberen Rand 15 mit Glasbruchstücken als Ausgangmaterial gefüllt. Durch Erhitzen der Glasbruchstücke reduziert sich deren Volumen auf das Füllvolumen des Behälters 1, so dass die Oberfläche der erstarrte Rauhschmelze 12 bündig mit dem Behälterrand 13 abschließt. Nach Abkühlen der Rauhschmelze wird der Aufsatz 14 entfernt.

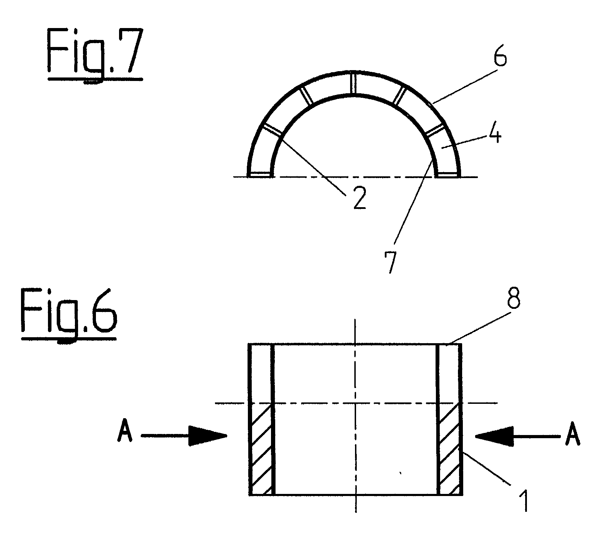

Für gekrümmte Bereiche des Förderweges und/oder muldenförmige Förderrinnen eignet sich insbesondere ein doppelwandiger, im Querschnitt halbkreisförmiger Behälter 1, wie er in den Figuren 6, 7 dargestellt ist. Der Behälter 1 ist lediglich an seiner Stirnseite 8 geöffnet, über die das Füllmaterial eingebracht wird. In der Schnittdarstellung der Figur 7 sind die Trennwände 2 erkennbar, die den Behälter 1 in Zellen 4 unterteilen.

Zur Befüllung des Auskleidungselementes 1 nach den Figuren 6,7 wird über die offene Stirnseite 8 Glasmehl oder Glasbruchstücke in die Zellen 4 gegeben und anschließend auf etwa 850 C° erhitzt. Der in Folge der Schrumpfung ungefüllte Teil des Behälters 1 wird vorzugsweise entlang der in Figur 6 gestrichelt dargestellten Linie abgetrennt.

| **Bezugszeichenliste** | |
|---|---|
| **Nr.** | **Bezeichnung** |
| 1. | Behälter |
| 2. | Trennwände |
| 3. | Trennwände |
| 4. | Zellen |
| 5. | Abstand |
| 6. | Seitenwände |
| 7. | Seitenwände |
| 8. | Stirnseite |
| 9. | Kunstharz |
| 10. | ------- |
| 11. | Glasbruchstücke |
| 12. | erstarrte Rauhschmelze |
| 13. | Behälterrand |
| 14. | Aufsatz |
| 15. | Rand |

## Patentansprüche

1. Auskleidungselement für einen Förderweg einer Förderanlage, insbesondere für Glasbruchstücke, wobei das Auskleidungselement ein Behälter ist, den Trennwände in mehrere Zellen unterteilen, **dadurch gekennzeichnet, dass** die Zellen (2,3) mit in ausgehärtetem Kunstharz (9) eingebetteten Glasbruchstücken (11) und/oder einer erstarrten Rauhschmelze (12) aus Glas gefüllt sind.

2. Auskleidungselement für einen Förderweg einer Förderanlage, **dadurch gekennzeichnet, dass** die Zellen mit einem Werkstoff gefüllt sind, der zumindest teilweise aus dem für den Transport auf dem Förderweg vorgesehenen Fördermaterial besteht.

3. Auskleidungselement nach Anspruch 1 oder 2, **dadurch gekennzeichnet, dass** sich die Füllung bzw. der Füllungsanteil aus in ausgehärtetem Kunstharz (9) eingebetteten Glasbruchstücken (11) zu 60 bis 70 Volumenprozent aus Glasbruchstücken (11) und dem Rest aus ausgehärteten Kunstharz (9) zusammensetzt.

4. Auskleidungselement nach einem der Ansprüche 1 bis 3, **dadurch gekennzeichnet, dass** 60 bis 80 Prozent, insbesondere 70 Prozent der Glasbruchstücke (11) eine Korngröße im Bereich von 4 - 12 mm und der Rest eine Korngröße im Bereich kleiner 4 mm aufweisen.

5. Auskleidungselement für einen Förderweg von einer Förderanlage nach einem der Ansprüche 1 bis 4, **dadurch gekennzeichnet, dass** die Trennwände (2,3) in Form eines Rostes miteinander verbunden sind.

6. Auskleidungselement nach Anspruch 5, **dadurch gekennzeichnet, dass** der Rost den im Verhältnis zu seiner Länge L und Breite B flachen Behälter (1) in zum Förderweg offene Zellen (4) unterteilt, der Rost am Behälterboden befestigt ist und sämtliche Trennwände (2,3) im Abstand (5) von den Seitenwänden (6,7) des Behälters (1) enden.

7. Auskleidungselement nach einem der Ansprüche 1 bis 6, **dadurch gekennzeichnet, dass** die Trennwände (3) in Einbaulage des Auskleidungselementes zumindest teilweise quer zum Förderweg verlaufen.

8. Auskleidungselement nach einem der Ansprüche 1 bis 7, **dadurch gekennzeichnet, dass** an der in Einbaulage des Behälters (1) unteren Seite mindestens ein Befestigungsmittel zur Fixierung jedes Auskleidungselementes am Förderweg angeordnet ist.

9. Verfahren zur Herstellung der Füllung für ein Auskleidungselement nach einem der Ansprüche 1 bis 8 ausschließlich mit einer erstarrten Rauhschmelze, **dadurch gekennzeichnet, dass** auf den Behälterrand (13) ein Aufsatz (14) gesetzt wird, der die Behälterwandung allseitig erhöht, der derart erhöhte Behälter (1) über das Füllvolumen des nicht erhöhten Behälters hinaus mit Glasbruchstücken (11) und/oder Glasmehl als Ausgangsmaterial soweit gefüllt wird, dass sich nach Erhitzen des Auskleidungselementes auf eine Temperatur im Transformationsbereich von Glas eine gegenüber dem Volumen des Ausgangsmaterials auf das Füllvolumen des nicht erhöhten Behälters (1) reduzierte Menge erstarrter Rauhschmelze (12) bildet, und sodann der Aufsatz (14) von dem Auskleidungselement entfernt wird.

10. Verfahren zur Herstellung der Füllung für ein Auskleidungselement nach einem der Ansprüche 1 bis 8 ausschließlich mit einer erstarrten Rauhschmelze, **dadurch gekennzeichnet, dass** der Behälter (1) mit Glasbruchstücken (11) und/oder Glasmehl gefüllt wird, dass sich nach Erhitzen des Auskleidungselementes auf eine Temperatur im Transformationsbereich von Glas eine gegenüber dem Füllvolumen des Behälters (1) reduzierte Menge an erstarrter Rauhschmelze (12) bildet.

11. Verfahren nach Anspruch 10, **dadurch gekennzeichnet, dass** anschließend der nicht mit erstarrter Rauhschmelze gefüllte Teil des Behälters abgetrennt wird.

12. Verfahren zur Herstellung der Füllung für ein Auskleidungselement nach einem der Ansprüche 1 bis 8 mit einer erstarrten Rauhschmelze und mit in ausgehärtetem Kunstharz eingebetteten Glasbruchstücken, **dadurch gekennzeichnet, dass** der Behälter mit Glasbruchstücken (11) und/oder Glasmehl gefüllt wird, dass sich nach Erhitzen des Auskleidungselementes auf eine Temperatur im Transformationsbereich von Glas eine gegenüber dem Füllvolumen des Behälters (1) reduzierte Menge an erstarrter Rauhschmelze (12) bildet und anschließend der nicht mit erstarrter Rauhschmelze gefüllte Teil des Behälters (1) mit Glasbruchstücken (11), Kunstharz (9) und Härter aufgefüllt wird.

13. Verfahren zur Herstellung der Füllung für ein Auskleidungselement nach einem der Ansprüche 1 bis 8 mit in ausgehärtetem Kunstharz eingebetteten Glasbruchstücken, **dadurch gekennzeichnet, dass** der Behälter mit Glasbruchstücken (11), Kunstharz (9) und Härter zumindest teilweise aufgefüllt wird.
